# EUROPEAN PATENT APPLICATION

(11) **EP 3 441 871 A1**
(43) Date of publication of application: **13.02.2019**
(21) Application number: 18185700.4
(22) Date of filing: 26.07.2018
(51) Int. Cl.: G06F 3/12

(54) **A METHOD OF PREPARING AN ELECTRONIC PRINT JOB**

(30) Priority: 09.08.2017 EP 17185530
(71) Applicant: OCE Holding B.V., 5914 CA Venlo (NL)
(72) Inventor: NISTOR, Mircea, 5914 CA Venlo (NL); FOUCAULT, Marc Y.V., 5914 CA Venlo (NL)
(74) Representative: OCE IP Department

(57) **Abstract**

A method of preparing an electronic print job file (22), the method comprising a step of ripping, e.g. raster image processing, an image (20, 28) to be printed, characterized in that the image (20, 28) is ripped twice, in two different orientations, and ripped images (20a, 20b, 28a, 28b) resulting from both ripping operations are included in the print job file (22).

## Description

The invention relates to a method of preparing an electronic print job file, the method comprising a step of ripping, i.e. raster image processing, an image to be printed, the image being specified in a single orientation which single orientation is specified in image data comprised in the electronic print job file.

In the printing industry, in particular in the field of large format printing, it is common practice that a powerful RIP unit (raster image processing unit) is provided separately from a print controller that controls a print engine such as a roll-to-roll printer or a flat bed printer. The images are then ripped in the RIP unit and the resulting raster images (bitmaps) are transmitted to the print controller via a suitable communication link such as a data network, a wire connection, a wireless link or the like. The data link may also be formed by hardware storage media which are physically transferred from the place of the RIP unit to the place of the print controller.

Typically, the images to be ripped have a rectangular frame, so that the image may be ripped in one of two different orientations, either in landscape format or portrait format. Once the image has been ripped, it is no longer possible to rotate the image without incurring a significant loss in quality. Thus, if the image is to be rotated in a later stage, it is necessary to re-rip the image.

US 8 736 906 B2 discloses a method for processing print jobs wherein the RIP orientation is determined on the basis of the expected orientation of recording media sheets which may be fed to the print engine either with the long edge first (LEF) or with the short edge first (SEF).

The print controller is usually configured to schedule a plurality of print jobs, and the scheduling process frequently includes a nesting process in which the positions of the images to be printed on a recording medium are determined such that the consumption of recording media is minimized and/or, in case of a flat bed printer having a configurable suction zone for attracting the media sheets to the print surface, the media sheets can be accommodated in the smallest possible suction zone.

It is an object of the invention to provide a method of preparing an electronic print job file which provides more flexibility in the subsequent job processing.

In order to achieve this object, in the method according to the invention, the image is ripped twice, in two different orientations comprising the single orientation, and ripped images resulting from both ripping operations are included in the print job file.

This has the advantage that an operator or a program such as a scheduler, a nesting algorithm or the like is free to change the orientation of the images to be printed even after ripping, without the need to rip the images again. Depending upon the orientation that is most suitable or convenient, the operator or the program simply selects the one of the two ripped versions of the image that has the required orientation. This permits to optimize the nesting processes without having to waste time and data bandwidth for reripping the images. This is particularly advantageous in situations where it is desired or necessary to do the nesting operation in a late stage of the workflow, for example because of changes in the job schedule or because of late editing operations performed on the print jobs.

According to an embodiment the images (20, 28) to be printed have rectangular frames, and the two different orientations are a portrait orientation and a landscape orientation. More generally, the images to be printed have rectangular frames and are rotated relatively to each other by a multiple of 90 degrees.

The invention also provides a printing method using the method of preparing a print job as described above, as well as a printing system for carrying out this method, and software products for performing the methods according to the invention or resulting from such method.

Embodiment examples will now be described in conjunction with the drawings, wherein:
- Fig. 1: is a block diagram of a printing system utilizing the method according to the invention;
- Figs. 2 and 3: illustrate different options for nesting images that belong to print jobs that have been prepared in accordance with the invention; and
- Figs. 4 and 5: illustrate different options for nesting images in suction zones of a flat bed printer.

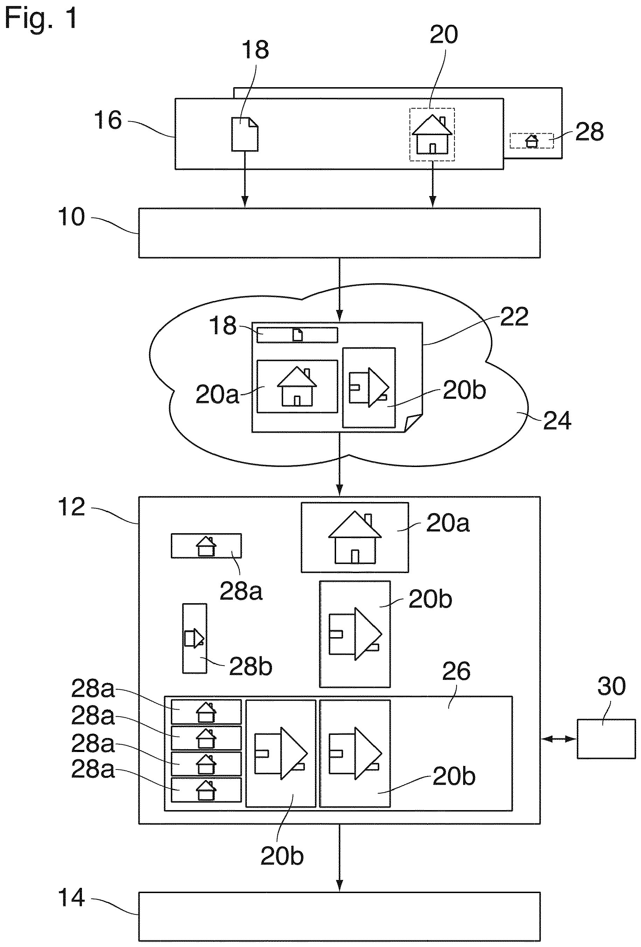

Fig. 1 shows a printing system comprising a RIP (raster image processing) unit 10, a print controller 12 and a printer 14.

The RIP unit 10 comprises one or more high-performance raster image processors and receives job data 16 for print jobs from another source, e.g. a workstation where the job data have been created. The job data comprise job meta data 18 and image data representing images 20, 28 to be printed. The single orientation is specified in the image data for each of the images 20, 28. The single orientation may be for example a portrait orientation or a landscape orientation.

The job meta data 18 comprise information specifying for example the name of the job, the creator, the destination of the printed product, the type of recording media to be used for printing, and the like. Optionally, these meta data may also specify the printer on which the print job is to be executed. The image data specify one or more images 20, 28 to be printed and the single orientation of each of the images 20, 28 respectively, each image having a rectangular frame shown in dashed lines in Fig. 1. The image contents to be printed in the area of this frame may be specified in any suitable format, e.g. in the form vector graphics or in the form of bitmap data.

As is well known in the art, the RIP unit 10 has the task to convert the image data of each image 20, 28 into a raster image (a bitmap or a set of bitmaps for each color component in the case of color printing) with a resolution that matches the capabilities of the printer 14 where the job is to be printed. Conventionally, the image data are ripped either in a portrait orientation or in a landscape orientation. In the portrait orientation, the shorter side of the rectangular frame of the image extends in the main scanning direction of the printer 14, and in the landscape orientation, it is the longer side of the frame that extends in the main scanning direction of the printer.

It is an outstanding feature of the invention that the RIP unit 10 is configured to subject each image 20, 28 contained in the image data to two RIP processes, one in the portrait orientation and one in the landscape orientation. Thus, the output of the RIP unit 10 is a job file 22, symbolized here as a job container, which contains the job meta data 18 and ripped images 20a, 20b of the same original image 20 in the two different orientations.

The job file 22 is transferred to the print controller 12 via any suitable data link 24 which may for example be a wired or wireless direct link or a wired or wireless network. However, the data link 24 may also be constituted by storing the job file on a data storage medium such as a DVD, a memory stick or the like and then physically transferring the storage medium from the place of the RIP unit 10 to the print controller 12.

It will be observed that the job file 22 with the ripped images 20a and 20b, regardless of whether it is transmitted via a network or stored on a storage medium, may be a tradable object which is sold by one entity running the RIP unit 10 and is bought by another entity which runs the print controller 12 and the printer 14.

As is well known in the art, the print controller 12 includes a scheduler which may receive print jobs from several sources, one of which is the RIP unit 10 shown here, and has the task to schedule these jobs for printing by determining a sequence in which the jobs are to be executed.

In the example shown in Fig. 1, it is further assumed that the printer 14 is a roll-to-roll-printer or a roll-to-sheet printer arranged for printing the images on a (practically) endless web 26 of a recording medium. A portion of the web 26 has been shown inside the block that represents the print controller 12 in Fig. 1. Although this portion of the web 26 has only a finite length, it shall be assumed that the length can be extended arbitrarily, to the right side in Fig. 1. In this case the scheduler does not only determine the sequence in which the print jobs are processed but includes also a nesting algorithm for determining the positions at which the ripped images, as specified by the print jobs, shall be printed on the web 26.

In the example shown the scheduler in the print controller 12 has scheduled two print jobs, one job comprising two copies of the ripped image 20b in the landscape orientation (the main scanning direction of the printer being the transverse direction of the web 26). Another print job, which has been scheduled to be printed first, comprises four copies of another ripped image 28a in the portrait orientation, obtained from the original image 28. If the print controller receives further print jobs, the ripped images of these jobs will be placed in the blank space on the web 26 on the right side.

In the print process the image data of the ripped images 28a and 20b will be transmitted to the printer 14 in the sequence from left to right in the drawing.

It shall be assumed here that both print jobs have been obtained from the RIP unit 10, so that the images of both print jobs are available in the print controller 12 in both a portrait version (images 28a, 20a) and a landscape version (images 28b, 20b). Consequently, the nesting algorithm in the print controller 12 may rotate the images as required, simply by selecting one of the two versions of the ripped images, in order to nest the images on the web 26 as compactly as possible, as has been illustrated in Fig. 1. In this example, the portrait version of the image 28 (ripped image 28a) has been selected because the four copies of this image fit nicely into the width of the web 26. Similarly, the landscape version of the image 20 (ripped image 20b) has been selected because the ripped images 20b fit nicely into the width of the web 26 in this orientation.

The print controller 12 is connected to a user interface 30 permitting a user or operator to edit the print jobs after they have been received from the RIP unit 10 (or any other source) and even after the jobs have been scheduled already. In latter case, a rescheduling of the jobs may become necessary.

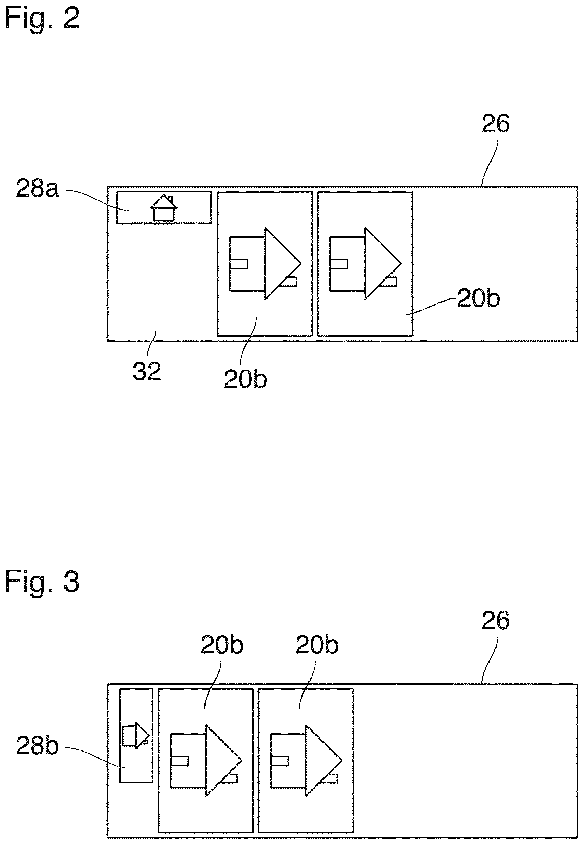

For example, an editing operation may consist in cancelling three of the four copies of the image 28a, as has been illustrated in Fig. 2. It can be seen that, after this editing operation, the available space on the web 26 is used less efficiency, because a large blank space 32 remains underneath the single copy of the image 28a. The nesting could therefore be improved significantly by rotating the image into the landscape orientation (image 28b), as has been shown in Fig. 3. The print controller 12 can easily achieve this without having to rip the image once again, because the rotated version of the image, i.e. the ripped image 28b in the landscape version, is already available in the print controller.

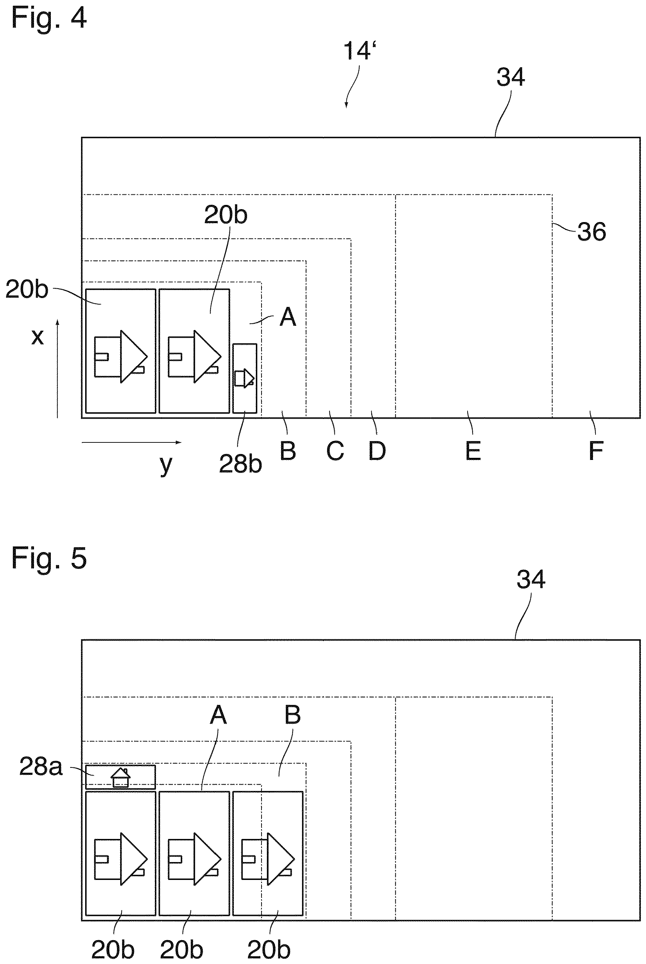

Figs. 4 and 5 show another embodiment in which the print job is designated for a flat bed printer 14' having a rectangular print surface 34 on which recording media sheets can be placed. As is well known in the art, a gantry (not shown) is arranged to move over the print surface 34 in a direction y (sub-scanning direction), and a print head carriage (also not shown) is mounted on the gantry and arranged to move along the gantry in a direction x (main scanning direction). In order to attract the media sheets to the print surface 34, the print surface is constituted by a perforated top wall of a suction box in which a vacuum is created so that air is drawn-in through the perforations in order to firmly hold the media sheets on the print surface.

In the example shown here, the suction box has separating walls 36 dividing the suction box into a number of rectangular suction zones A - F with successively increasing area, the largest suction zone F covering the entire print surface 34. The vacuum pressure in these suction zones can be controlled independently, so that the size of the suction zone where air is drawn in through the print surface may be adapted to the area that is actually needed for printing, so that the energy consumption may be reduced.

In the example shown in Fig. 4, a print job consists of printing two copies of the image 20 and one copy of the image 28 (shown in Fig. 1). A nesting operation is performed manually by an operator or automatically by a nesting algorithm in the print controller 12 and aims at arranging the media sheets on which the images are to be printed such that a smallest possible suction zone is needed. In the example shown, the suction zone A is sufficient for the job, if the landscape version is selected for the image 20b and also for the image 28b.

Fig. 5 illustrates a situation where the print job consists of printing three copies of the image 20 and one copy of the image 28. This print job may possibly be the result of an editing operation performed on the print job shown in Fig. 4. It turns out that the print zone A is no longer sufficient, but the larger print zone B is needed. The three images 20b in the landscape format fit into the length of the print zone B, and the width of this print zone is large enough to accommodate also the image 28a, but now in the portrait version. Thus, the nesting can be optimized by rotating some of the images, which does not require a new ripping operation because the ripped images 20a, 20b, 28a, 28b are available already in both orientations.

## Claims

1. A method of preparing an electronic print job file (22), the method comprising a step of ripping, e.g. raster image processing, an image (20, 28) intended to be printed in a single orientation which single orientation is specified in image data comprised in the electronic print job file, **characterized in that** the image (20, 28) is ripped twice, in two different orientations comprising the single orientation, and ripped images (20a, 20b, 28a, 28b) resulting from both ripping operations are included in the print job file (22).

2. The method according to claim 1, wherein the images (20, 28) to be printed have rectangular frames, and the two different orientations are a portrait orientation and a landscape orientation.

3. The method according to claim 1, wherein the images to be printed have rectangular frames and are rotated relatively to each other by a multiple of 90 degrees.

4. A printing method comprising the steps of:
a) preparing a print job file (22) by the method according to claim 1, 2 or 3; and
b) performing a nesting operation for determining the positions of the ripped images (20a, 20b, 28a, 28b) on a recording medium, wherein an orientation of each image on the recording medium is determined by selecting from among the two different orientations of the ripped images.

5. A printing system comprising at least one printer (14; 14'), a print controller (12) for said at least one printer, and a RIP unit (10) connected to the print controller (12) by a data link (24), **characterized in that** the RIP unit (10) is configured to perform the method according to claim 1, 2 or 3.

6. The printing system according to claim 5, wherein the print controller (12) has implemented therein a nesting algorithm configured to perform step b) of the printing method according to claim 4.

7. The printing system according to claim 5 or 6, wherein the printer (14) is adapted for printing on an endless web (26).

8. The printing system according to claim 5 or 6, wherein the printer (14') is a flat bed printer.

9. The printing system according to claim 8, wherein the printer (14') has a print surface (34) formed by a suction box with configurable suction zones (A-F) for attracting media sheets onto the print surface.

10. A software product comprising program code on a non-transitory computer-readable medium, the program code, when loaded into a RIP unit (10) of a printing system, causes the RIP unit to perform the method according to claim 1, 2 or 3.

11. A software product comprising program code on a non-transitory computer-readable medium, the program code, when loaded into a print controller (12) for a printer (14; 14'), causes the print controller to perform the step b) of the method according to claim 4.

12. A software product comprising an electronic print job file (22) stored on a non-transitory computer-readable medium, wherein the print job file has been obtained by the method according to claim 1, 2 or 3.
